(19) Europäisches Patentamt
European Patent Office
Office européen des brevets

(11) **EP 2 600 039 A1**

(12) **EUROPEAN PATENT APPLICATION**

(43) Date of publication:
**05.06.2013 Bulletin 2013/23**

(51) Int Cl.:
**F16H 63/18** (2006.01)   *F16H 3/00* (2006.01)
**F16H 3/093** (2006.01)

(21) Application number: **11191257.2**

(22) Date of filing: **30.11.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **C.R.F. Società Consortile per Azioni**
**10043 Orbassano (Torino) (IT)**

(72) Inventors:
• **Piacenza, Gianni**
  **I-10043 Orbassano (Torino) (IT)**

• **Pesola, Fabio**
  **I-10043 Orbassano (Torino) (IT)**
• **Piazza, Andrea**
  **I-10043 Orbassano (Torino) (IT)**
• **Pregnolato, Gianluigi**
  **I-10043 Orbassano (Torino) (IT)**

(74) Representative: **Notaro, Giancarlo**
**Buzzi, Notaro & Antonielli d'Oulx**
**Via Maria Vittoria 18**
**10123 Torino (IT)**

(54) **Gear change device for a motor-vehicle**

(57)     A gear-change device for a motor vehicle comprising at least one actuator drum ($T_F$, $T_G$) that can be driven in rotation for controlling gear-engagement devices (S1/7, S2/6, S3/5, S4/R; S3/7, S2/6, S1/5, S4/R) and comprising at least one cam track ($f_1$, $f_2$) having a path comprising at least one neutral stretch (NG) and at least one deviated stretch (E) connected to said at least one neutral stretch (NG) by means of a connection stretch (J). The gear-change device further comprises the following combination of characteristics:

- in each deviated stretch (E) the cam track ($f_1$, $f_2$) has a width greater than the width in correspondence of said at least one neutral stretch (NG); and

- each cam track ($f_1$, $f_2$) includes a first blind end and a second blind end.

FIG. 2

## Description

The present invention relates to gear-change devices for motor vehicles, of the type comprising at least one actuator drum that can be driven in rotation for controlling gear-engagement devices and comprising at least one cam track, wherein engaged on said gear-engagement devices are respective fork actuator elements, which are mounted so that they can slide in a direction parallel to the axes of at least one first primary shaft and at least one first secondary shaft of said gear change and each have a cam-follower element engaged in a respective cam track of said at least one actuator drum, said at least one first secondary shaft being parallel to, and set at a distance, from said at least one first primary shaft, wherein each cam track has a path comprising at least one neutral stretch and at least one deviated stretch connected to said at least one neutral stretch by means of a connection stretch,
wherein, when the cam-follower element of each fork actuator element is in a position corresponding to a neutral stretch of the cam track where it is engaged, the corresponding gear-engagement device is in a condition of gear disengaged,
wherein, when the cam-follower element of each fork actuator element is in a position corresponding to a deviated stretch of the cam track where it is engaged, the corresponding gear-engagement device is in a condition of gear engaged.

In gear-change devices of a known type, normally the fork actuator elements are mounted on the gear-engagement devices, in particular sleeves of the gear-engagement devices, with a certain play. This hence enables sizing of the width of the cam tracks with a uniform value equal to the diameter of the cam-follower pins of each fork actuator element.

However, this does not always guarantee optimal operation of the gear-change, in so far as it is possible for disengagement of a gear to occur late or not occur at all on account of the play existing between the fork and the sleeve. In this way, the axial play between the fork and the sleeve can at times open the way to problems of wear and possibly premature failure of the gear-change.

Mention of the problems regarding assembly tolerances in gear changes is made, for example, in the description of the document No. DE-A-199 11 274. However, the gear-change device illustrated therein does not solve the problem of the precision of operation of the gear change completely.

In fact, the gear-change device described in DE-A-199 11 274 envisages an actuator drum with cam tracks of the "endless" type, i.e., extending along an arc of 360° about the axis of the drum without any discontinuity. The width of the cam tracks is greater in the active stretches thereof.

The use of "endless" cam tracks having a width increased in the active stretches thereof might introduce considerable operating problems. For example, suppose that in correspondence of a complete angle of rotation of an actuator drum there is located an active stretch, wherein the engagement of a gear is controlled, immediately followed by a connection stretch. The absence of any kind of end-of-travel device can lead, on account of the slack coupling between the cam-follower pin and the cam track, to position errors that are progressively amplified (for example, with wear) up to the point of loss of controllability of the gear change, with spontaneous disengagement of the gear. This can happen, for example, because the narrowing of the width of the cam track from the increased value to the normal value can occur in a restricted space at the interface between a connection stretch and an active stretch, which can in turn result in a jerky movement of the cam-follower (on account of the interference that is suddenly created and on account of the geometry and of operation of the gear-engagement devices) towards the neutral stretch.

Generally, an attempt is made to remedy said situation by providing mechanical end-of-travel elements on the gear box, which introduce considerable complications from the constructional standpoint and from the standpoint of the arrangement of the fork actuator elements in so far as, especially when the gear change comprises a rather high number of gears - for example, greater than or equal to six - recourse to very complex geometries of the aforesaid actuator elements in order to get over the obstacle constituted by the end-of-travel elements is not infrequent.

The object of the present invention is to provide a gear-change device that will overcome the technical problems referred to previously.

In view of achieving said purpose, the subject of the invention is a gear-change device having all the features referred to previously and moreover characterized by the combination of the following characteristics:

a) said at least one cam track terminates with a first end and a second opposite and blind ends;
b) in correspondence of each deviated stretch the cam track has a width greater than the width in correspondence of said at least one neutral stretch.

The combination of the two features produces a synergistic effect: not only is it possible to compensate for the play only on the actuator drums, by mounting the forks on the sleeves of the gear-engagement devices in a stable and precise way, but it is also possible to overcome the problems referred to above since the blind ends of the cam tracks function themselves as mechanical end-of-travel elements, without the need to provide other components within the gear box.

In the preferred embodiment, the gear-change device is of the double-clutch type described in the European patent application No. 11174638.4 filed in the name of the present applicant and still secret at the date of filing of the present application.

Further advantageous characteristics of the invention will emerge from the ensuing description with reference to the annexed drawings, which are provided purely by way of example and in which:

- Figure 1 is a schematic drawing of a preferred embodiment of a gear-change device according to the invention;
- Figures 1A, 1B illustrate, respectively, a detail of the gear-change device of Figure 1 and a cross section of the same detail;
- Figures 2 and 3 illustrate a rectilinear development of cam tracks of actuator drums according to the present invention, in particular of the two actuator drums envisaged for the preferred embodiment of the invention;
- Figures 4 to 7 are enlarged views of details indicated, respectively, by the arrows IV', V', VI' and VII' in Figure 2;
- Figures 8 to 11 are enlarged views of details indicated, respectively, by the arrows VIII', IX', X' and XI' in Figure 3;
- Figure 12 comprises a first portion A and a second portion B illustrating a partially sectioned rectilinear development of a detail indicated by the arrow XII' in Figure 1 in two distinct instants of a gear-engagement manoeuvre; and
- Figure 13 illustrates a further embodiment of a gear-change device according to the invention.

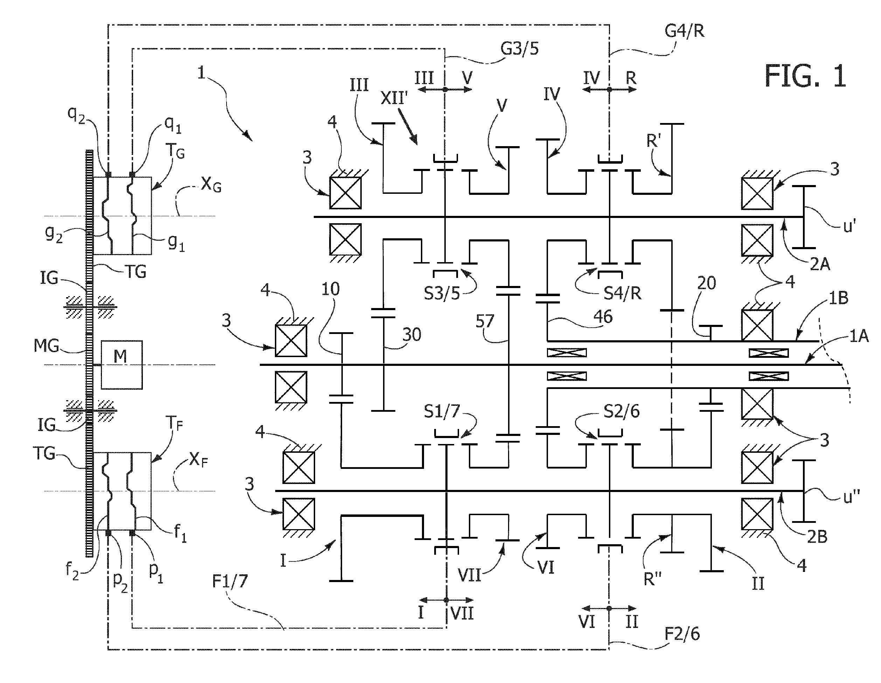

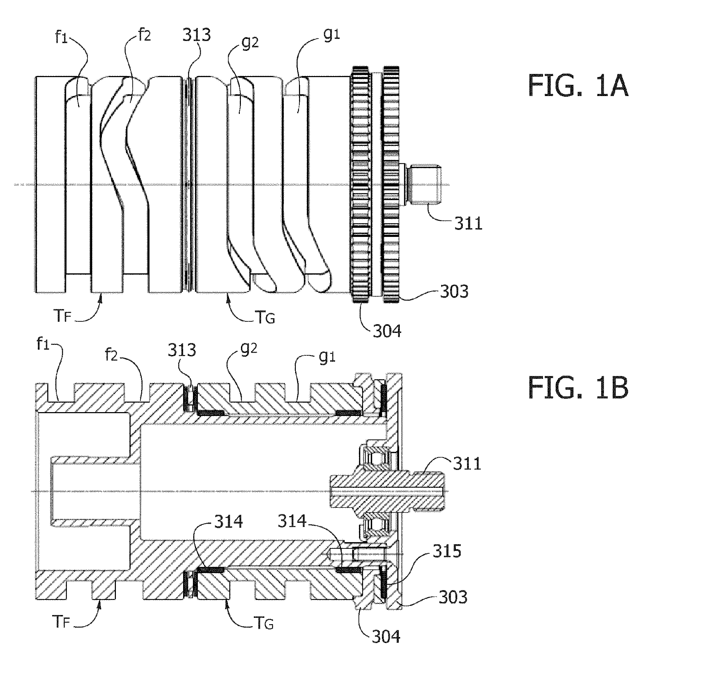

Figure 1 is a diagram of a gear-change device of the type already illustrated, for example, in the European patent application No. EP 11172411.8 filed in the name of the present applicant (and still secret at the date of the filing of the present application), to which the teachings of the present invention preferably apply.

The gear-change device 1 illustrated in Figure 1 comprises a first primary shaft 1A and a second primary shaft 1B, which are coaxial to each other and whose right-hand ends (with reference to the figures) can be selectively connected to the engine shaft of a motor vehicle by means of a double-clutch device of any known type (not illustrated).

The references 2A, 2B designate as a whole a first secondary shaft and a second secondary shaft, the axes of which are parallel to, and set at a distance from, the common axis of the two primary shafts 1A, 1B.

For greater clarity, Figure 1 shows the shafts 1A, 1B, 2A, 2B as if they had their three axes all set in the same plane, whereas said axes are not in actual fact coplanar but rather are set in a triangle.

All the aforesaid shafts are rotatably supported by means of rolling bearings 3 within the casing 4 of the gear-change.

The two secondary shafts 2A, 2B have at their right-hand ends (as viewed in the figures) output pinions u', u" (which can have the same number or a different number of teeth) that are intended to mesh, in a way in itself known, with a gear wheel of a differential (not illustrated).

The gear-change device illustrated has a plurality of pairs of gear wheels, corresponding to the plurality of forward gears and to a reverse gear, where the gear wheels of each pair are one rigidly connected in rotation to one of the primary shafts or to one of the secondary shafts, whilst the other is set so that it can rotate freely, respectively, in the two cases, on one of the secondary shafts or on one of the primary shafts. Moreover, once again according to conventional techniques, the device comprises a plurality of gear-engagement devices designed to couple each of said freely rotatable gear wheels in rotation with the shaft on which it is mounted.

In the specific case illustrated, the references I, II, III, IV, V, VI, VII, R" designate, respectively, gear wheels mounted so that they can rotate freely on the first secondary shaft 2A or on the second secondary shaft 2B and can be coupled to the respective secondary shaft for selecting the first, second, third, fourth, fifth, sixth, and seventh gears and the reverse gear, respectively.

The gear wheel I meshes with a gear wheel 10 rigidly and permanently connected in rotation to the first primary shaft 1A, i.e., on the innermost primary shaft, on an end portion thereof that extends beyond the end of the second primary shaft 1B.

The gear wheel II of the second gear meshes with a gear wheel 20 rigidly connected on the primary shaft 1B.

The gear wheel III of the third gear meshes with a gear wheel 30 rigidly connected on the primary shaft 1A.

The gear wheel IV of the fourth gear and the gear wheel VI of the sixth gear both mesh with one and the same gear wheel 46 rigidly connected on the primary shaft 1B.

The gear wheel V of the fifth gear and the gear wheel VII of the seventh gear both mesh with one and the same gear wheel 57 rigidly connected on the primary shaft 1A.

The selector devices for coupling in rotation each of the gear wheels I, II, III, IV, V, VI, VII, R" are designated by the references S1/7, S2/6, S3/5, S4/R, each of said selectors being activatable in opposite directions for selecting different gears (the figures of the number that follows the reference S indicate the gears that can thus be selected).

The second forward gear is defined by a pair of gear wheels 20, II, the first of which is permanently connected in rotation to the outermost primary shaft 1B and the other is mounted so that it can rotate freely on the second secondary shaft 2B and can be coupled in rotation therewith via a gear-engagement device schematically illustrated in the drawing and designated by the reference S2/6 (to indicate that said device selects in one direction the second gear and in the other direction the sixth gear).

The reverse gear is defined by a first reverse gear wheel R', which is mounted so that it can rotate freely on the first secondary shaft 2A and can be coupled in rotation therewith via the gear-engagement device S4/R, and by a second reverse gear wheel R", which functions as idle gear for reversal of motion and meshes with the first gear wheel R (said meshing is represented schematically in the figures with the dashed line, this being possible owing to the fact that the two axes of the secondary shafts and the common axis of the primary shafts are not contained in one and the same plane). The second reverse gear wheel R" is permanently connected in rotation to the gear wheel II of the second gear and is mounted so that it can rotate freely therewith on the second secondary shaft 2B.

With the arrangement described above, the engagement of the reverse gear is obtained by activating the selector device S4/R and leaving inactive the selector device S2/6, so as to leave the second reverse gear wheel R" freely rotatable on the second secondary shaft 2B. In said situation, the motion coming from the outermost primary shaft 1B is transferred to the gear wheel II and from this to the gear wheel R", to the gear wheel R', and to the first secondary shaft 2A.

In the preferred embodiment of the invention, the gear-engagement devices S4/R, S3/5, S2/6 and S1/7 that are visible in Figure 1 are constituted by synchronizers, each comprising a sleeve that can be displaced axially by means of fork actuator elements (which are represented only schematically since they are in themselves known to persons skilled in the branch), designated in the drawings by the symbols F and G followed by the references of the gears controlled thereby. The symbol F is used for the fork actuator elements that are to be controlled by a first actuator drum $T_F$, and the symbol G is used for the fork actuator elements that are to be controlled by a second actuator drum $T_G$, as will be illustrated more fully in what follows.

The fork members F1/7, F2/6 and G3/5, G4/R are mounted so that they can slide on guide rods (preferably one for each pair of forks F, G, but in some variants of the invention it is possible to have two guide rods parallel to one another for each pair of forks F, G) set parallel to one another and at a distance apart, and connected to the fixed structure 4 of the gear-change (not visible in said figures). The rods 301 are directed parallel to the axes of the primary and secondary shafts.

Each of the fork members F and G has an elongated body, with an end fork that engages the sleeve of the respective gear-engagement device and the opposite end terminating with a cam-follower element, in the form of a pin, which engages a respective cam track of a respective rotating actuator drum.

In the preferred embodiment that is illustrated in the annexed drawings, two actuator drums, $T_F$ and $T_G$, are envisaged, having a respective pair of cam tracks $f_1$, $f_2$ and $g_1$, $g_2$.

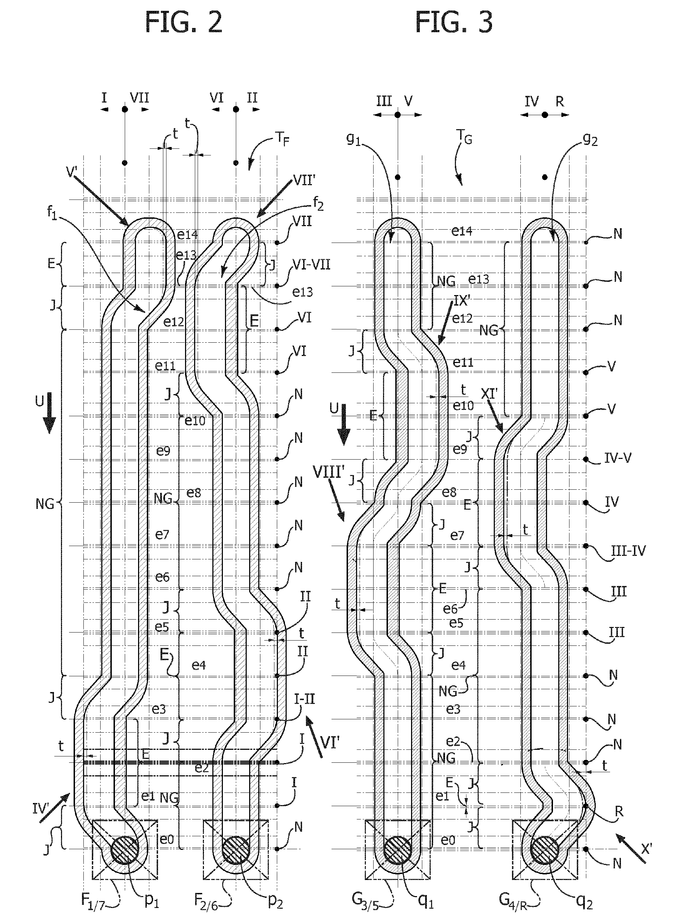

Figures 2 and 3 of the annexed drawings show the development in the plane of the four cam tracks $f_1$, $f_2$, $g_1$, $g_2$, provided according to a preferred embodiment of the present invention with a schematic representation of the four actuator elements F1/7, F2/6, G3/5, G4/R, with the respective cam-follower pins designated by $p_1$, $p_2$, $q_1$, $q_2$.

As may be immediately inferred from Figures 1-3, the two cam tracks $f_1$, $f_2$ of the first actuator drum $T_F$ control the two fork actuator elements F1/7 and F2/6 that are associated to one and the same secondary shaft. In the same way, the two cam tracks $g_1$, $g_2$ of the other actuator drum $T_G$ control the two fork actuator elements G3/5 and G4/R that are associated also to one and the same secondary shaft and that control, in the case of the example illustrated, also engagement of the reverse gear.

The two actuator drums $T_F$ and $T_G$ are mounted so they can rotate about respective axes of rotation $X_F$ and $X_G$ parallel to and distinct from one another, and are (in this example) driven in rotation by means of a single electric motor M and a cascaded gear transmission. The cascaded gear transmission comprises a motor pinion MG fitted on an output shaft of the electric motor M and two idle gear wheels IG that mesh with the pinion MG and with corresponding driven gear wheels TG rigidly connected in rotation to a respective actuator drum $T_F$, $T_G$.

In variants of the example illustrated herein, it is possible to have direct meshing of the motor pinion MG with the gear wheels TG, and in yet other variants, the two actuator drums $T_F$ and $T_G$ are mounted coaxially with respect to one another, with an arrangement illustrated by way of example in Figures 1A-1B, and driven by independent electric motors. Preferably, in these latter variants associated to each drum are only gears of the same order (even/odd); consequently, the association of the cam tracks to the drums $T_F$, $T_G$ is preferably different from that of the example illustrated herein.

In the aforesaid latter variants, the drum $T_F$ has a portion that rotatably supports the drum $T_G$ by means of sliding bearings 314, a thrust block 315, and a thrust bearing 313. The body of the drum $T_F$ is moreover rigidly connected at its right-hand end (as viewed in Figure 1B) to a gear wheel 303, whilst the actuator drum $T_G$ is connected in rotation to a gear wheel 304. The set of the two drums $T_F$, $T_G$ is moreover rotatably supported, by means of the gear wheel 303, on a supporting pin 311, via a rolling bearing 312. The two gear wheels 303, 304, connected in rotation to the actuator drums $T_F$, $T_G$, are controlled in rotation, as has already been said, by independent electric motors.

With reference to Figures 2 and 3, each cam track $f_1$, $f_2$ and $g_1$, $g_2$ has a path comprising at least one neutral stretch and at least one active stretch that is deviated with respect to the aforesaid neutral stretch and connected thereto by means of a connection stretch.

In particular, in the example illustrated herein, the reference NG designates each of the neutral stretches of the cam tracks $f_1$, $f_2$ and $g_1$, $g_2$, the reference E designates each of the deviated stretches of the cam

tracks $f_1$, $f_2$ and $g_1$, $g_2$, whilst the reference J designates each of the connection stretches. Moreover, according to the present invention:

- each of the cam tracks $f_1$, $f_2$ and $g_1$, $g_2$ terminates with a first blind end and a second blind end that are opposite to one another and preferably, as in the example illustrated herein, extends along an arc of amplitude of less than 2n rad (360°); and
- the neutral stretches NG of each cam track are all aligned with one another and have a width that is substantially equal to the diameter of each cam-follower pin $p_1$, $p_2$, $q_1$, $q_2$, whilst in correspondence of each of the active stretches E, each cam track $f_1$, $f_2$ and $g_1$, $g_2$ has a width increased with respect to the neutral stretches NG by an amount t.

The rotary motion (in this example, of a synchronous type) of each of the actuator drums $T_F$ and $T_G$ causes a variation in the position of each cam-follower $p_1$, $p_2$, $q_1$, $q_2$ within the corresponding cam track $f_1$, $f_2$ and $g_1$, $g_2$, determining the engagement (and, in the example considered herein, also a pre-selection) of the various gears.

When a cam-follower $p_1$, $p_2$, $q_1$, $q_2$ is in a position corresponding to a neutral stretch NG, the corresponding engagement element (i.e., the one on which the fork actuator element that carries the aforesaid cam-follower acts) is in a gear-disengaged condition. Instead, when a cam-follower $p_1$, $p_2$, $q_1$, $q_2$ is in a position corresponding to an active stretch E, the corresponding engagement element is in a gear-engaged condition. The neutral and active stretches are joined by the connection stretches J, which have a substantially curvilinear development.

As is known to the person skilled in the branch, since it is a double-clutch gear change the cam tracks are designed so as to provide simultaneous engagement of two gears defining kinematic chains associated to different primary shafts. One of the two gears engaged is not used for the transmission of power since the clutch associated to the corresponding primary shaft is disengaged.

Moreover, since operation of the actuator drums is not independent and since these have cam tracks $f_1$, $f_2$ and $g_1$, $g_2$ that start and terminate all in a position corresponding to the very same generatrices on the corresponding actuator drum, all the cam-followers $p_1$, $p_2$, $q_1$, $q_2$ present substantially zero angular staggering, and hence always the same relative angular position (and are always aligned with one another).

Starting from the position of the cam-follower $p_1$, $p_2$, $q_1$, $q_2$ illustrated in Figures 2 and 3, a rotation in the direction U of the motor pinion MG causes a corresponding rotation in the same direction of both of the actuator drums, which consequently move in a synchronous way. The direction U corresponds to the direction of engagement of the higher gears.

The various combinations of gears that are engaged during rotation of the drums are highlighted graphically by means of sets of three dashed and double-dotted lines (located at the extremes of regular angular intervals), designated by a reference "e" followed by a progressive numbering, namely (N indicates the condition of "neutral"):

| | $T_F$ | | $T_G$ | |
|---|---|---|---|---|
| | $F_{1/7}$, $p_1$ | $F_{2/6}$, $p_2$ | $G_{3/5}$, $q_1$ | $G_{4/R}$, $q_2$ |
| e0 | N | N | N | N |
| e1 | I | N | N | R |
| e2 | I | N | N | N |
| e3 | I | II | N | N |
| e4 | N | II | N | N |
| e5 | N | II | III | N |
| e6 | N | N | III | N |
| e7 | N | N | III | IV |
| e8 | N | N | N | IV |
| e9 | N | N | V | IV |
| e10 | N | N | V | N |
| e11 | N | VI | V | N |
| e12 | N | VI | N | N |
| e13 | VII | VI | N | N |
| e14 | VII | N | N | N |

It should be noted that at the angles of rotation designated by sets of lines e1, e3, e5, e7, e9, e11, e13 a pre-selection of the gear subsequent to the gear engaged is made.

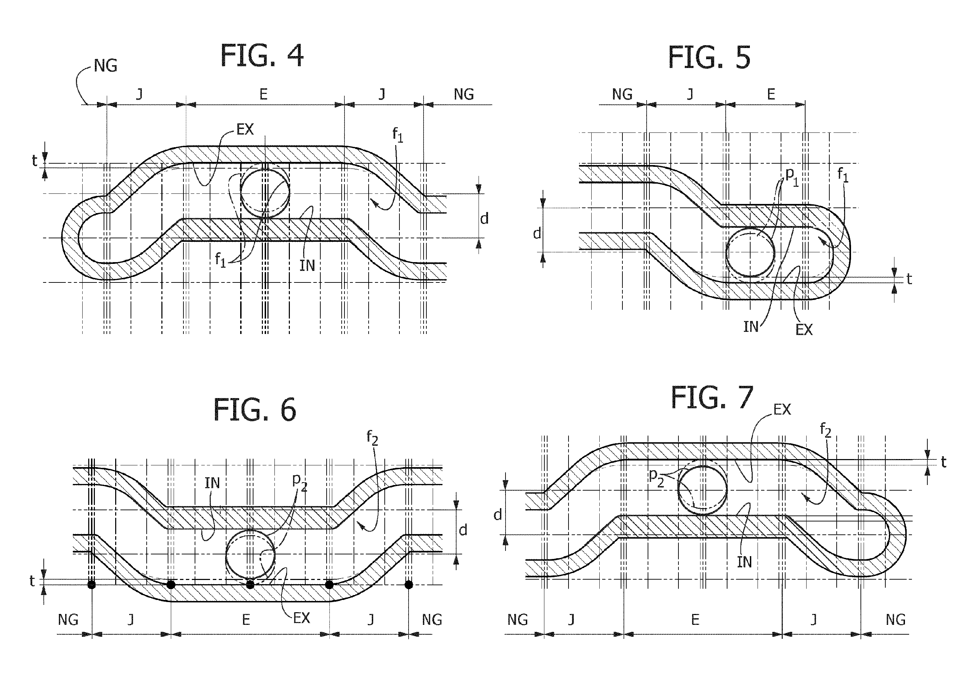

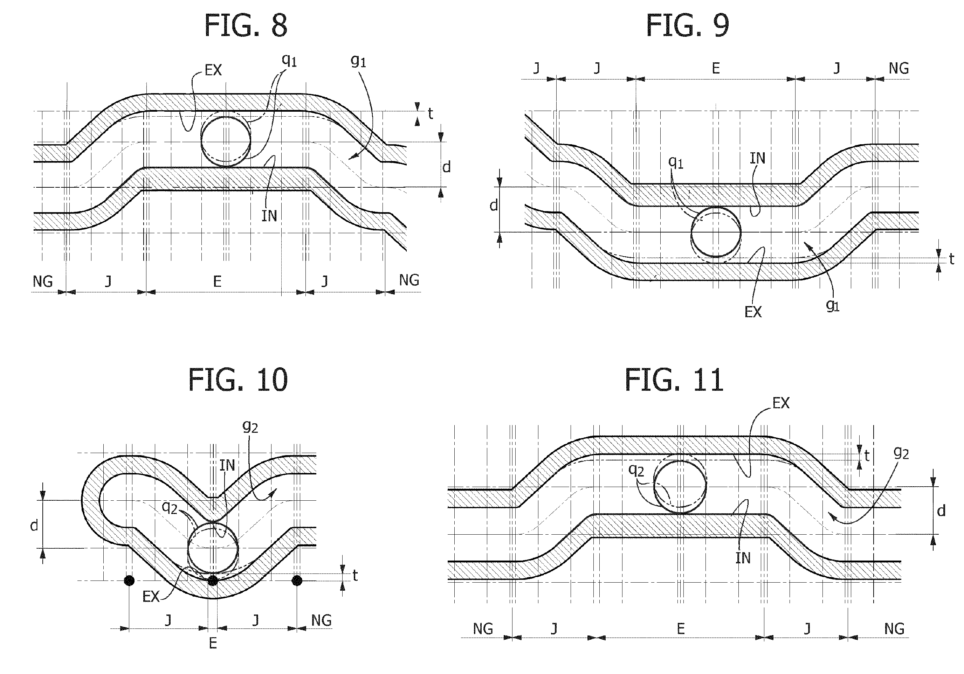

Figures 4 to 7 and 8 to 11 illustrate enlargements of the cam tracks $f_1$, $f_2$ and $g_1$, $g_2$ in correspondence of the respective active stretches E. The dashed and double-dotted lines within the cam tracks indicate the trace of a cam track of a width that is substantially constant and equal to that of the cam-follower pin engaged therein. In the figures, the increase in width of the track is represented by an amount t set on only one side with respect to the cam-follower pin in order to highlight that, in the active stretches E, only the outer side (EX) of each cam track has a profile modified with respect to the traditional one.

In other words, the widening of each cam track in the active stretches E (understood as deviation from the nominal profile of uniform width (designated by a dashed and double-dotted line) is obtained in a position corresponding just to the outer sides EX.

The inner side (IN) of each active stretch maintains, instead, the traditional profile, thus preventing any play to be recovered on the portion of the cam track that in effect exerts the thrust on the cam-follower pin during engagement. It should be noted in fact that the inner side exerts an action on the corresponding cam-follower during engagement of a gear, whilst the outer side exerts an action on the corresponding cam-follower when the same gear is disengaged.

Of course, the characterization of one side of the cam track as "inner" or "outer" depends upon the direction in which the active stretch is deviated with respect to the neutral stretches of each individual cam track.

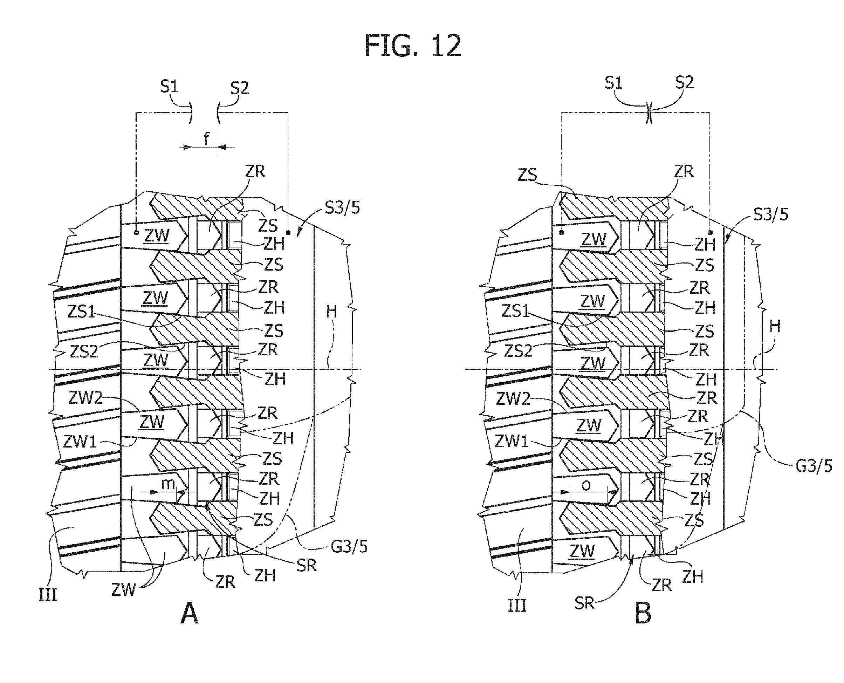

Figure 12A illustrates the position of one of the gear-engagement devices - here S3/5 has been chosen - after the end of the synchronization step and at the start of the engagement step. In greater detail, the gear-engagement device S3/5 here represented (in rectilinear development) is a synchronizer comprising a sleeve on which the fork G3/5 engages (see dashed and double-dotted line) and comprising a plurality of teeth ZS with radial orientation. The teeth ZS are coupled to a corresponding toothing ZH on the hub of the synchronizer and are configured to co-operate with teeth ZR (also with radial orientation) of a synchronizer ring SR and with front teeth ZW of the gear wheel III. All these components and their operation are widely known to persons skilled in the branch and do not require a detailed description herein. The teeth ZW comprise an end region having a substantially wedge-shaped geometry with oblique sides and moreover have an elongated shape also with oblique sides ZW1 and ZW2.

The same may be said for the teeth ZS: for this reason, the references ZS1 and ZS2 indicate the oblique sides of each tooth ZS corresponding to those of the teeth ZW.

The reference m indicates a minimum overlapping value between the teeth ZW and ZS during the gear-engagement step, below which the teeth ZW and ZS are subject to premature wear and could moreover not be able to exchange forces sufficient for propelling a vehicle. Once the amount m is reached (and exceeded) the forces exchanged between the teeth ZW and ZS are such as to prevent phenomena of premature wear. In one embodiment, the amount m is in the order of approximately 1 mm and is covered by the displacement imposed on the cam-follower pin $q_1$ in the passage from the condition of neutral to that of gear engaged (in this case the third gear), designated by d in Figures 4-11. It should be noted that d can be chosen so as to be constant for engagement of all the gears or can be variable according to the gear engaged.

The amount f indicates, instead, the distance that separates two end-of-travel elements S1, S2 - the one obtained on the ring of teeth ZW, the other obtained on the sleeve of the synchronizer itself - which determine the maximum range of travel of the sleeve of the synchronizer S3/5.

With reference to Figure 12B, the amount f vanishes at the end of the engagement manoeuvre, where the overlap between the teeth ZS and ZW is maximum. It should be noted that the ends-of-travel S1 and S2 are positioned in such a way that the ends of the teeth ZS never come into contact with the bottom of the compartments that separate the teeth ZW on the gear wheel III (in this case, the bottom coincides with portions of the gear wheel III itself).

In other words, indicating by O the maximum overlap between the teeth ZW and ZS once gear engagement is completed, the amount O (depending upon the range of travel of the sleeve, hence upon f, S1, S2) is always less than the length of the teeth ZW.

With reference once again to Figures 4 to 7 and 8 to 11 as well as to Figure 12, the amount t is chosen so as to satisfy the following relation:

$$ t \geq g + f $$

where g is the amount of play necessary to compensate for the machining, fitting, and assembly tolerances. In other words, the widening of each cam track must be such as to compensate for the machining, fitting, and assembly tolerances and such as to cover, moreover, at least the entire range of travel (in the direction of engagement of the third gear) possible for the sleeve of the synchronizer S3/5. This ensures that the end-of-travel elements S1 and S2 come into contact quite a bit before the cam-follower pin $q_1$ touches against the side EX of the corresponding cam track. This prevents the possibility of damage or of excessive stresses on the cam tracks deriving from interference with the cam-follower pin.

Preferably, the amount t has values comprised between 0.25 mm and 4 mm, depending upon the type of gear-change device, in particular depending upon the application (and the vehicle) for which it is designed.

What has been described above also applies to all the gears of the gear-change device.

Of course, without prejudice to the principle of the invention, the details of construction and the embodiments may vary widely with respect to what has been described and illustrated herein purely by way of example, without thereby departing from the scope of the present invention.

In particular, even though the embodiment illustrated by way of example envisages gear-engagement devices that control, respectively, the pairs of gears 1 and 7; 2 and 6; 3 and 5 and 4 and R, it is altogether possible to envisage couplings of different gears in association with each gear-engagement device.

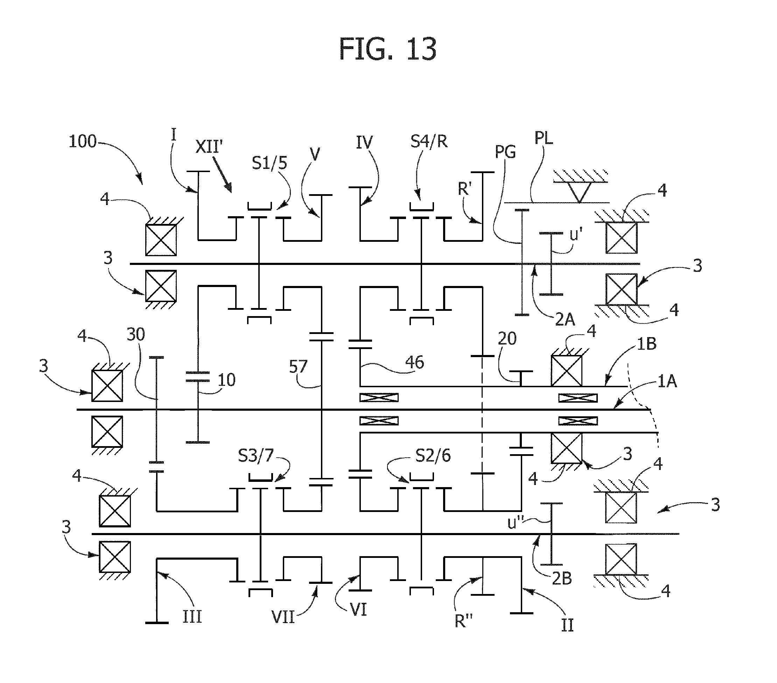

In this connection, Figure 13 illustrates schematically a further embodiment of a gear-change device to which it is possible to apply the teachings of the present invention.

Reference numbers identical to those previously used for the gear-change device 1 will be used to underline the functional correspondence between the parts.

The system of operation will not be illustrated any further in so far as it is possible to adopt (albeit not exclusively) the same system described previously, with modifications within the reach of the person skilled in the branch.

The gear-change device 100 illustrated in Figure 13 comprises a first primary shaft 1A and a second primary shaft 1B that are mutually coaxial, whose right-hand ends (as viewed in the figures) can be selectively connected to the engine shaft of a motor vehicle by means of a double-clutch device of any known type (not illustrated).

The references 2A, 2B designate as a whole a first secondary shaft and a second secondary shaft, the axes of which are parallel and set at a distance from the common axis of the two primary shafts 1A, 1B.

For greater clarity, Figure 1 shows the shafts 1A, 1B, 2A, 2B as if they had their three axes all set in the same plane whereas said axes are not in actual fact coplanar but rather are set in a triangle.

All the aforesaid shafts are rotatably supported by means of rolling bearings 3 within the casing 4 of the gear-change.

The two secondary shafts 2A, 2B have at their right-hand ends (as viewed in the figures) output pinions u', u" (which can have the same number or a different number of teeth) that are both to mesh, in a way in itself known, with a gear wheel of a differential (not illustrated). In this embodiment, however, the pinions u' and u" are comprised between the bearings 3 that support the corresponding shafts.

The gear-change device 100 has a plurality of gear pairs, corresponding to the plurality of forward gears and to a reverse gear, where the gears of each pair are one rigidly connected in rotation to one of the primary shafts or to one of the secondary shafts, whilst the other is set so that it can rotate freely respectively, in the two cases, on one of the secondary shafts or on one of the primary shafts. Moreover, the device 100 comprises a plurality of gear-engagement devices designed to couple each of said freely rotatable gears in rotation with the shaft on which it is mounted.

In accordance with the convention adopted in the preceding portion of description, the references I, II, III, IV, V, VI, VII, R designate, respectively, gears mounted so that they can rotate freely on the first secondary shaft or on the second secondary shaft 2A, 2B and can be coupled to the respective secondary shaft for selecting, respectively, the first, second, third, fourth, fifth, sixth, seventh gears and the reverse gear.

The gear wheel I meshes with a gear wheel 10 rigidly and permanently connected in rotation to the first primary shaft 1A, i.e., on the inner primary shaft, on an end portion thereof that extends beyond the end of the second primary shaft 1B.

The gear wheel II of the second gear meshes with a gear wheel 20 rigidly connected on the primary shaft 1B.

The gear wheel III of the third gear meshes with a gear wheel 30 rigidly connected on the primary shaft 1A.

The gear wheel IV of the fourth gear and the gear wheel VI of the sixth gear both mesh with one and the same gear wheel 46 rigidly connected on the primary shaft 1B.

The gear wheel V of the fifth gear and the gear wheel VII of the seventh gear both mesh with one and the same gear wheel 57 rigidly connected on the primary shaft 1A.

The selector devices for coupling in rotation each of the gear wheels I, II, III, IV, V, VI, VII, R" are designated by the references S3/7, S2/6, SI/5, S4/R, each of said selectors being activatable in opposite directions for selecting different gears (the figures of the number that follows the reference S indicate the gears that can thus be selected).

The second forward gear is defined by a pair of gear wheels 20,II, the first of which is connected permanently in rotation to the outermost primary shaft 1B, and the other is mounted so that it can rotate freely on the second secondary shaft 2B and can be coupled in rotation therewith via a gear-engagement device schematically illustrated in the drawing and designated by the reference S2/6 (to indicate that said device selects in one direction the second gear and in the other direction the sixth gear).

The reverse gear is defined by a first reverse gear wheel R', which is mounted so that it can rotate freely on the first secondary shaft 2A and can be coupled in rotation therewith via the gear-engagement device S4/R, and by a second reverse gear wheel R", which functions as idle gear for reversal of motion and that meshes with the first gear wheel R (said meshing is represented schematically in the figures with the dashed line, this being possible by the fact that the two axes of the secondary shafts and the common axis of the primary shafts are not contained in one and the same plane). The second reverse gear wheel R" is permanently connected in rotation to the gear wheel II of the second gear and is mounted so that it can rotate freely therewith on the second secondary shaft 2B.

With the arrangement described above, engagement of the reverse gear is obtained by activating the selector device S4/R and leaving the selector device S2/6 inactive, so as to leave the second reverse gear wheel R" so that it can rotate freely on the second secondary shaft 2B. In said situation, the motion coming from the outermost primary shaft 1B is transferred to the gear wheel II and from this to the gear wheel R", to the gear wheel R', and to the first secondary shaft 2A.

A parking gear PG is set between the gear wheel R' and the pinion u', in a position aligned with the gear wheel II. The parking gear PG is blocked by means of a parking lock PL, in itself known.

In the preferred embodiment of the invention, the gear-engagement devices S4/R, S1/5, S2/6 and S3/7 that are visible in Figure 1 are constituted by synchronizers, each comprising a sleeve that can be displaced axially by means of fork actuator elements, as described for the gear-change device 1.

All the teachings described as regards the device 1 apply indifferently to the gear-change 100, of course with the obvious modifications in the association between synchronizers, fork elements, and gears that can be engaged owing to exchange of the position of the gear wheels I and III. The gear wheel I has been displaced on the shaft 2A, whilst the gear wheel III has been displaced on the shaft 2B, where the centre-to-centre distance between the shaft 2A and the primary shafts 1A, 1B is greater than the centre-to-centre distance between the secondary shaft 2B and the primary shafts 1A, 1B. This also requires an exchange of position between the gear wheels 30 and 10 on the shaft 1A with respect to the position occupied in the gear-change 1.

In the above configuration, the cam-follower pins $p_1$ and $p_2$ are associated to the synchronizers S3/7 and S2/6, respectively, whilst the cam-follower pins $g_1$, $g_2$ are associated to the synchronizers S1/5 and S4/R, respectively.

It is moreover possible to apply the teachings of the present invention to gear-change devices having a single primary shaft and a single secondary shaft (or possibly two secondary shafts) and single clutch. Notwithstanding this, it is possible to envisage a lower number of actuator drums, for example a single actuator drum that carries all four cam tracks $f_1$, $f_2$ and $g_1$, $g_2$. It is likewise possible to apply the teachings of the invention also to gear-change devices with a lower number of forward gears (possibly even less than four), which can then be controlled by a single actuator drum with a single cam track, by means of which a single pair of forks or even a single fork is controlled.

In practice, it is in general possible to apply the teachings of the present invention to any gear-change device equipped with gear-engagement devices (synchronised or otherwise) that couple a gear wheel in rotation with a shaft on which it is mounted idle, possibly envisaging further combinations as regards the number of actuator drums and cam tracks, for example a single actuator drum with two or three cam tracks. It is likewise usable on gear changes having more than one reverse gear.

**Claims**

1. A gear-change device for a motor vehicle, comprising at least one actuator drum ($T_F$, $T_G$) that can be driven in rotation for controlling gear-engagement devices (S1/7, S2/6, S3/5, S4/R; S3/7, S2/6, S1/5, S4/R) and comprising at least one cam track ($f_1$, $f_2$; $g_1$, $g_2$), wherein engaged on said gear-engagement devices are respective fork actuator elements (F1/7, F2/6, G3/5, G4/R), which are mounted so that they can slide in a direction parallel to the axes of at least one first primary shaft (1A, 1B) and at least one first secondary shaft (2A, 2B) of said gear change and each have a cam-follower element ($p_1$, $p_2$; $q_1$, $q_2$) engaged in a respective cam track ($f_1$, $f_2$ and $g_1$, $g_2$) of said at least one actuator drum ($T_F$, $T_G$), said at least one first secondary shaft being parallel to, and set at a distance from, said at least one first primary shaft,

wherein each cam track has a path comprising at least one neutral stretch (NG) and at least one deviated stretch (E) connected to said at least one neutral stretch (NG) by means of a connection stretch (J),

wherein, when the cam-follower element ($p_1$, $p_2$; $q_1$, $q_2$) of each fork actuator element (F1/7, F2/6, G3/5, G4/R; S3/7, S2/6, S1/5, S4/R) is in a position corresponding to a neutral stretch (NG) of the cam track ($f_1$, $f_2$; $g_1$, $g_2$) in which it is engaged, the corresponding gear-engagement device (S1/7, S2/6, S3/5, S4/R; S3/7, S2/6, S1/5, S4/R) is in a condition of gear disengaged,

wherein, when the cam-follower element ($p_1$, $p_2$; $q_1$, $q_2$) of each fork actuator element (F1/7, F2/6, G3/5, G4/R; S3/7, S2/6, S1/5, S4/R) is in a position corresponding to a deviated stretch (E) of the cam track ($f_1$, $f_2$; $g_1$, $g_2$) in which it is engaged, the corresponding gear-engagement device (S1/7, S2/6, S3/5, S4/R; S3/7, S2/6, S1/5, S4/R) is in a condition of gear engaged,

the gear-change device being **characterized in that** it comprises the following combination of characteristics:

- in correspondence of each deviated stretch (E), the cam track ($f_1$, $f_2$; $g_1$, $g_2$) has a width greater than the width in correspondence of said at least one neutral stretch (NG), and
- each cam track ($f_1$, $f_2$; $g_1$, $g_2$) terminates with a first and a second opposite and blind ends.

2. The gear-change device according to Claim 1, further comprising:

- a plurality of gear wheels comprising pairs of gear wheels (10,I; 20,II; 30,III; 46,IV; 57,V; 46,VI; 57,VII) meshing with one another, wherein each of said pairs of gear wheels (10,I; 20,II; 30,III; 46,IV; 57,V; 46,VI; 57,VII) comprises a first gear wheel carried by said at least one first primary shaft (1A, 1B) and a gear wheel carried by said at least one first secondary shaft (2A, 2B), said gear wheels defining a plurality of forward gears (I, II, III, IV, V, VI, VII) and at least one reverse gear (R) of said gear change, wherein each of said pairs of gear wheels (10,I; 20,II; 30,III; 46,IV; 57,V; 46,VI; 57,VII) comprises a first gear wheel rigidly connected in rotation to one of said first primary shaft and said first secondary shaft and a second gear wheel mounted so that it can rotate freely on the other of said first primary shaft and said first secondary shaft.

3. The gear-change device according to Claim 2, **characterized in that** each cam track ($f_1$, $f_2$; $g_1$, $g_2$) extends along an arc of amplitude of less than 2n rad.

4. The gear-change device according to Claim 2 or Claim 3, **characterized in that** it comprises a first actuator drum ($T_F$) and a second actuator drum ($T_G$), each including a first cam track and a second cam track ($f_1$, $f_2$; $g_1$, $g_2$), and
**in that** each actuator drum ($T_F$, $T_G$) is configured for controlling a first fork actuator element and a second fork actuator element (F1/7, F2/6, G3/5, G4/R; S3/7, S2/6, S1/5, S4/R), the cam-follower elements ($p_1$, $P_2$; $q_1$, $q_2$) of which are engaged in a respective one of the cam tracks ($f_1$, $f_2$; $g_1$, $g_2$) of said actuator drum ($T_F$, $T_G$).

5. The gear-change device according to Claim 4, **characterized in that** each of said first actuator drum ($T_F$) and second actuator drum ($T_G$) are rotatable around axes of rotation ($X_F$, $X_G$) parallel to and distinct from one another.

6. The gear-change device according to Claim 5, **characterized in that** said first actuator drum ($T_F$) and said second actuator drum ($T_G$) can be actuated in rotation by means of a single electric motor (M) and a cascaded gear transmission (MG, IG; DG).

7. The gear-change device according to Claim 5, **characterized in that** said first actuator drum ($T_F$) and said second actuator drum ($T_G$) are mounted coaxially with respect to one another and can be driven by means of a respective electric motor.

8. The gear-change device for a motor vehicle according to Claim 6 or Claim 7, **characterized in that** it comprises:

   - a first primary shaft (1A) and a second primary shaft (1B), which are coaxial and can be connected selectively to the engine shaft of the motor vehicle by means of a double-clutch device; and
   - a first secondary shaft (2A) and a second secondary shaft (2B), the axes of which are parallel to, and set at a distance from, the common axis of said primary shafts, and which have respective output pinions (u', u") that are configured to mesh with a gear wheel of a differential.

9. The gear-change device according to Claim 8, **characterized in that** the reverse gear (R) is defined by:

   - a first reverse gear (R') mounted so that it can rotate freely on the first secondary shaft (2A) and can be connected in rotation to the latter by means of one of said gear-engagement devices (S4/R) in order to select the reverse gear.

10. The gear-change device according to any one of the preceding claims, **characterized in that** each of said fork actuator elements (F1/7, F2/6, G3/5, G4/R; S3/7, S2/6, S1/5, S4/R) has an elongated body with a fork-shaped end and the opposite end carrying the respective cam-follower element ($p_1$, $p_2$; $q_1$, $q_2$).

11. The gear-change device according to Claim 8, **characterized in that** the axes of the two secondary shafts (2A, 2B) and the common axis of said primary shafts (1A, 1B) have a triangular arrangement.

12. The gear-change device according to any one of the preceding claims, **characterized in that** the width of each cam track ($f_1$, $f_2$; $g_1$, $g_2$) in correspondence of said at least one active stretch (E) is increased by an amount (t) ranging between 0.25 mm and 4 mm with respect to the width in correspondence of said at least one neutral stretch (NG).

FIG. 1

FIG. 1A

311

303

304

g1

g2

$T_G$

313

f2

f1

$T_F$

FIG. 1B

311

315

303

304

g1

g2

$T_G$

314

314

313

f2

f1

$T_F$

# FIG. 2

# FIG. 3

# FIG. 4

# FIG. 5

# FIG. 6

# FIG. 7

# FIG. 8

EX  q1  g1

t

d

NG  J  E  J  NG

IN

# FIG. 9

J  J  E  J  NG

d

q1  IN

t

EX  g1

# FIG. 10

g2

IN

d

q2

t

EX

J  J  NG

E

# FIG. 11

EX

t  g2

q2

d

IN

NG  J  E  J  NG

EP 2 600 039 A1

# FIG. 12

EP 2 600 039 A1

# FIG. 13

EP 2 600 039 A1

Europäisches
Patentamt

European
Patent Office

Office européen
des brevets

# EUROPEAN SEARCH REPORT

Application Number

EP 11 19 1257

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | EP 1 251 299 A2 (HYDRAULIK RING GMBH [DE])<br>23 October 2002 (2002-10-23)<br>* paragraph [0024]; figure 4 *<br>* paragraphs [0035], [0039] - [0041];<br>figure 10 *<br>* paragraph [0055]; figures 14-16 *<br>* paragraph [0074]; figure 19 *<br>* paragraphs [0080], [0081]; figures<br>24-27 * | 1-4,7,<br>10,12<br>5,6,8,9,<br>11 | INV.<br>F16H63/18<br><br>ADD.<br>F16H3/00<br>F16H3/093 |
| X | EP 1 655 518 A1 (KWANG YANG MOTOR CO [TW])<br>10 May 2006 (2006-05-10)<br>* paragraph [0006]; figures 1,3,4 * | 1-3,10 | |
| Y<br>A | EP 2 385 270 A1 (FIAT RICERCHE [IT])<br>9 November 2011 (2011-11-09)<br>* the whole document * | 5,6,8,9,<br>11<br>1,2,10 | |
| A | EP 1 286 088 A1 (GETRAG FORD TRANSMISSIONS<br>GMBH [DE]) 26 February 2003 (2003-02-26)<br>* abstract; figure 1 * | 1,7 | |
| Y<br>A | EP 2 322 822 A1 (FIAT RICERCHE [IT])<br>18 May 2011 (2011-05-18)<br>* paragraphs [0019], [0034] - [0044];<br>figures 2,5-8 * | 8,9,11<br>1-3,10 | TECHNICAL FIELDS<br>SEARCHED (IPC)<br><br>F16H |
| A,D | DE 199 11 274 A1 (BOSCH GMBH ROBERT [DE])<br>21 September 2000 (2000-09-21)<br>* the whole document * | 1,12 | |

The present search report has been drawn up for all claims

| Place of search | Date of completion of the search | Examiner |
|---|---|---|
| Munich | 28 March 2012 | Wurzer, Oliver |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT**

**ON EUROPEAN PATENT APPLICATION NO.**

EP 11 19 1257

This annex lists the patent family members relating to the patent documents cited in the above-mentioned European search report.
The members are as contained in the European Patent Office EDP file on
The European Patent Office is in no way liable for these particulars which are merely given for the purpose of information.

28-03-2012

| Patent document cited in search report | | Publication date | Patent family member(s) | | Publication date |
|---|---|---|---|---|---|
| EP 1251299 | A2 | 23-10-2002 | DE | 10113161 A1 | 26-09-2002 |
| | | | EP | 1251299 A2 | 23-10-2002 |
| | | | US | 2002152823 A1 | 24-10-2002 |
| EP 1655518 | A1 | 10-05-2006 | AT | 418031 T | 15-01-2009 |
| | | | EP | 1655518 A1 | 10-05-2006 |
| | | | ES | 2319415 T3 | 07-05-2009 |
| EP 2385270 | A1 | 09-11-2011 | CN | 102233806 A | 09-11-2011 |
| | | | EP | 2385270 A1 | 09-11-2011 |
| | | | US | 2011265601 A1 | 03-11-2011 |
| EP 1286088 | A1 | 26-02-2003 | DE | 50101206 D1 | 29-01-2004 |
| | | | EP | 1286088 A1 | 26-02-2003 |
| EP 2322822 | A1 | 18-05-2011 | AT | 548587 T | 15-03-2012 |
| | | | CN | 102062178 A | 18-05-2011 |
| | | | EP | 2322822 A1 | 18-05-2011 |
| | | | EP | 2375101 A2 | 12-10-2011 |
| | | | US | 2011113922 A1 | 19-05-2011 |
| DE 19911274 | A1 | 21-09-2000 | DE | 19911274 A1 | 21-09-2000 |
| | | | IT | MI20000473 A1 | 10-09-2001 |

EPO FORM P0459

For more details about this annex : see Official Journal of the European Patent Office, No. 12/82

**EP 2 600 039 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19911274 A
- EP 11174638 A
- EP 11172411 A